# EUROPEAN PATENT APPLICATION

(11) **EP 2 816 570 A1**
(43) Date of publication of application: **24.12.2014**
(21) Application number: 13172431.2
(22) Date of filing: 18.06.2013
(51) Int. Cl.: H01F 1/10, H01F 1/34, H01F 1/40

(54) **Reversible alteration of a magnetic state of a material**

(71) Applicant: Karlsruher Institut für Technologie, 76131 Karlsruhe (DE)
(72) Inventor: Dasgupta, Subho, 76344 Eggenstein-Leopoldshafen (DE); Das, Bijoy Kumar, 76344 Eggenstein (DE); Kruk, Robert, 76344 Eggenstein (DE); Hahn, Horst, 64342 Seeheim (DE)
(74) Representative: Stößel, Matthias

(57) **Abstract**

The present invention discloses a method for a reversible alteration of a magnetic state of a material. According to a step a), an electrochemical cell with at least one first electrode of a first polarity and at least one second electrode of a second polarity opposing the first polarity is provided, wherein the at least one first electrode at least comprises a ferromagnetic host material with intercalation sites for a reception of non-magnetic atoms, and wherein the at least one second electrode at least comprises an amount of the non-magnetic atoms. According to a step b), the electrochemical cell is consecutively charged and/or discharged to allowing at least a part of the amount of the non-magnetic atoms to move between the intercalation sites the host material and the second electrode, by which movement the magnetic state of the material is reversibly altered. Hereby, the host material comprises a structure which is retained during the alteration of the magnetic state of the material.

Further, a device for a reversible alteration of a magnetic state of a material, particularly for performing the method described above, is disclosed. The device is particularly used as part of a magnetic valve and/or of a magnetic shutter and/or of a magnetic sensor and/or a part thereof and/or in an array comprising magnetic beads and/or for magnetic manipulation and/or magnetic guidance and/or magnetic sorting of inorganic, organic or biological substances or a mixture thereof which may react to magnetic phenomena, especially in microfluidics.

## Description

### Field of the invention

The invention relates to a method and to a device for a reversible alteration of a magnetic state of a material as well as to a use of the device.

### Related art

Advancements in spintronics over the last decade have shown that a controlled variation of a magnetic state in a material by an application of an electric potential, even at ambient temperatures, is possible as long as the material comprises a thin film metallic ferromagnet or a dilute magnetic semiconductor. This development has particularly been performed to address energy-efficient, high-density magnetic data storage with a faster switching. However, these surface- or interface-controlled effects have always been limited to ultra-thin films or to quantum dots, resulting in a very small volume which can be altered with respect to the magnetic state.

From the beginning of this millennium, magneto-electric composite systems have attracted a large deal of attention. Although a gate-voltage and/or a large electric-field induced variation of the magnetic properties have earlier been demonstrated at low temperatures, recent results from Y. Yamada et al., Science, 332, 2011, 1065, D. Chiba et al., Nature Mater., 10, 2011, 853, and T. Maruyama et al., Nature Nanotechnol., 4, 2009, 158, show that a control over the magnetic anisotropy or the Curie temperature of a magnetic sample is generally possible also at room temperature.

S. Topolovec et al., J. Magn. Magn. Mater., 329, 2013, 43, have shown a very small change in a sample within a magnitude of only a few percent with respect to the magnetic state of the sample at ambient temperatures. This interface-mediated field-effect being limited to an ultra-thin surface layer of atoms not only impedes a successful reading-out of magnetization changes in such a small volume/small signal, but also inhibits an application of this effect for a magnetism-guided actuation process. The reason is that the field-effect which is exerted either by a dielectric or by a highly polarizable ferroelectric and/or electrolyte is only able to penetrate a fraction of a monolayer of atoms into a ferromagnetic metallic or a half-metallic material due to an extremely efficient field screening.

W. Erenstain et al., Nature Mater., 6, 2007, 348, and S. Gepraegs, Appl. Phys. Lett., 96, 2010, 142509, have demonstrated that a strain-mediated variation in magnetism is able to penetrate deeper, i.e. tens of nanometers, into the surface of a film, which may lead to a larger fraction of alteration in anisotropy or in magnetic response.

V. Sivakumar et al., ECS Trans., 2, 2007, 1, report magnetism measurements before and after an insertion of lithium into thin films and into nanocrystallites of magnetite Fe₃O₄. The authors observed a change of the magnetic state of a sample but were not able to reverse the observed effect and, thus, to return to the initial magnetic state of the sample.

On the other hand, it is well-known that reversible lithium intercalation and deintercalation may be obtained in anode as well as in cathode materials. G. N. Zhu et al., Energy Environ. Sci. 4, 2011, 4016; Y.-Q. Wang et al., J. Am. Chem. Soc., 134, 2012, 7874; and C. Sun et al., J. Am. Chem. Soc., 133, 2011, 2132, show examples for thousands of cycles with such materials where they exhibit a nearly constant charge capacity.

### Problem to be solved

From this background, it seems very difficult to reliably perform a transition of a bulk volume from a strong ferromagnetic state into a weak- or a non-ferromagnetic state and, subsequently, to return to the original ferromagnetic state, or vice versa.

It is therefore an objective of the present invention to provide a method, a device and a use of the device, which are adapted for an alteration of a magnetic state of a material, particularly at ambient temperatures, that can be performed reversibly and repeated over a considerable number of cycles.

### Summary of the invention

This problem is solved by a method, by a device, and by a use of the device, which are adapted for an alteration of a magnetic state of a material, having the features of the independent claims. Preferred embodiments of the invention, which may be realized in an isolated way or in any arbitrary combination, are disclosed in the dependent claims.

According to a first aspect of the present invention, a method for a reversible alteration of a magnetic state of a material is disclosed. As further used herein, the material is any three-dimensional body which may consist of a single phase or may comprise another substance apart from the specimen which is designated to be reversibly altered by the method according to the present invention. The body may be provided as a bulk material in any form, for example as any kind of thin or thick films or as a plurality of nanocrystallites with dimensions in the range from 1 nm to 10 µm, particularly from 10 nm to 1000 nm. In the case of nanocrystallites, the size of a specific nanocrystallite may be different from the size of a neighboring nanocrystallite. Only in a preferred embodiment, the crystallite size exhibits a distribution which is monodispersed. As further used herein, the distribution is monodispersed as long as the size of the majority of the nanocrystallites in the material can be assigned to a specific size class.

According to the present invention, the body comprises a ferromagnetic host material. As further used herein, the host material is considered as a first substance which is configured to receiving a second substance within its crystal lattice, in particular within any empty site in the lattice, voids, caverns, cavities, or other hollow spaces and being surrounded at least partially by the atoms of the first substance. With respect to the present invention, the host material offers intercalation sites which are adapted to be filled with non-magnetic atoms. As further used herein, the process of intercalation denotes an inclusion of an atom, a molecule or a group of molecules into the host material whereby the host material is, in general, specifically adapted to such reception. Similarly, a deintercalation denotes a release of an atom, a molecule or a group of molecules from the host material.

Further according to the present invention, the method disclosed herein is directed to a reversible alteration of a magnetic state in the material. As further used herein, the magnetic state expresses the magnetic properties of the material. In general, the material may hereby take any of the magnetic states which are known from solid state science, including but not limited to a non-magnetic state, a paramagnetic state, or a ferromagnetic state. In a particular embodiment, the non-magnetic state comprises a diamagnetic state, or an antiferromagnetic state. An *antiferromagnetic* state is found in a material with opposing magnetic moments of atoms which belong to different sublattices, wherein the opposing magnetic moments cancel each other, resulting in a non-magnetic state. On the other hand, the ferromagnetic state includes a *ferrimagnetic* state, wherein the opposing magnetic moments of the different sublattices are unequal since the sublattices for example comprise different atoms or ions, e. g. Fe²⁺ and Fe³⁺, or, alternatively, the same ions (Fe³⁺) but in different numbers, so that a finite spontaneous magnetization remains.

As further used herein, the alteration of the magnetic state in the material is defined as a transition from a first magnetic state, which may be observed prior to performing the method according to the present invention, into a second magnetic state, which is distinct from the first magnetic state and which may be observed after performing the method. In a preferred embodiment, the alteration modifies the magnetic state of the material from a strong ferromagnetic state into a non-ferromagnetic state, e.g. an antiferromagnetic state, or from a strong ferromagnetic state into a weak ferromagnetic state, or vice-versa. According to the present invention, the alteration occurs in a reversible manner, particularly completely reversible, in order to be able to return into the previous magnetic state of the material, or, alternatively, reversible only to a partial extent. In a particularly preferred embodiment, the alteration is still reversible after a plurality of cycles of the method has been performed consecutively on the same material, whereby, as further used herein, each cycle includes a consecutive discharging of the electrochemical cell which is followed by a charging of the electrochemical cell, or vice-versa.

According to the present invention, the method comprises step a) and step b), wherein step b) is performed after step a) and/or at least partially concurrently with step a). In particular, it is preferred to perform step b) repeatedly, preferentially in a plurality of cycles. Further, additional steps may be comprised which are not mentioned in the following.

According to step a), an electrochemical cell with at least one first electrode of a first polarity, e.g. a cathode, and at least one second electrode of a second polarity which opposes the first polarity, e. g. an anode in this example, is provided. As further used herein, the electrochemical cell is a device in which chemical reactions are performed via an introduction of electrical energy. In addition to the first electrode and to the second electrode, one or more other parts which may facilitate or improve the performance of the electrochemical cell may be present. The geometrical form and the size of the electrochemical cell is arbitrary but may be adjusted to the requirements of the device and/or of the surroundings wherein the device is located. In a preferred embodiment, the electrochemical cell is further equipped with a separator which has the predominant purpose to physically, in particular electrically, separate the at least one first electrode from the at least one second electrode, especially to avoid any short circuit between the at least one first electrode and the at least one second electrode. Particularly in this configuration, the electrochemical cell is further equipped with an electrolyte which, nevertheless, enables the exchange of ions and/or electrons between the at least one first electrode and the at least one second electrode.

Further according to step a), the first electrode which is provided as a part of the electrochemical cell comprises a ferromagnetic host material being equipped with intercalation sites which are adapted for a reception of non-magnetic atoms. Hereby, the material may only form the first electrode or, more generally, the material is combined with other suitable substances which form the first electrode together with the material. In a preferred embodiment, the material is, therefore, mixed with a further electrically conducting substance, including but not limited to different forms of highly conducting carbon materials, such as graphite, amorphous carbon particles, carbon nanotubes, or graphene, as well as with a binder material which has the predominant purpose of forming a body of the mixture which exhibits an adequate mechanical stability.

In a particularly preferred embodiment, the ferromagnetic host material comprises a first compound with a spinel lattice with a first general formula

AFe₂O₄, (1)

wherein A denotes at least one non-magnetic element, which is, in particular, selected from a first list including but not limited to {Mg, Zn, Ti, Li, Ca}, especially giving rise to compounds such as MgFe₂O₃, ZnFe₂O₄, TiFe₂O₄, and CaFe₂O₄. The first compound according to formula (1) exhibits an antiferromagnetic state which is a non-ferromagnetic state or a weak ferromagnetic state which can be transformed into a ferromagnetic state by the method according to the present invention. In other words: Providing a first compound as the material or a part thereof and treating it according to the present method will allow to "switch on" ferromagnetism in this previously non-magnetic or weakly ferromagnetic compound.

Alternatively, the inverse spinel materials may have an inversion parameter less than 1, i.e., the non-magnetic element A' is also located at the tetrahedral site, when they exhibit a size of the nanocrystallites in the nanometer range. This may be represented by the second general formula of

(Fe₁₋ₓAₓ)[Fe₁₊ₓA₁₋ₓ], (2)

wherein the first parentheses (..) and the second parentheses [...] indicate a tetrahedral site occupancy and a octahedral site occupancy, respectively. Instead of an antiferromagnet, the material can also be a ferrimagnet with a spontaneous magnetization amounting to an octahedral minus a tetrahedral component which is '2x' multiplied by the magnetic moment of a single iron atom per formula unit. Therefore, this material may also be altered from the ferrimagnetic state into the antiferromagnetic state by the method as proposed here. This kind of alteration can be considered as a 'switching off by an application of the method as presented here.

In another preferred embodiment, the ferromagnetic host material comprises a third compound with a third general formula

BFe₂O₄, (3)

wherein B can be one or more of a weak or of a strong magnetic element such as {Fe, Mn, Co, Ni, Cu}. In a particularly preferred embodiment, the ferromagnetic host compound may also be selected from a second list of spinels comprising {Fe₃O₄, γ -Fe₂O₃, MnFe₂O₄, CoFe₂O₄, NiFe₂O₄, CuFe₂O₄}. However, within this regard, it has to be considered that such ferrites show a high resultant spontaneous magnetic moment, by which a complete 'switching off of the magnetism or a driving to the antiferromagnetic state may be difficult by intercalation of a non-magnetic element. However, these materials do, in addition, show a different cation distribution or a spin canting in the nanocrystallite form of the material in contrast to the bulk form which may support the reduction of the total magnetization of these kinds of host materials.

In an alternative embodiment, the preferred ferromagnetic or antiferromagnetic host material which will be driven to magnetically 'on' to 'off and 'off to 'on', respectively, may also be chosen from a list of mixed ferrites which comprise compounds including ternary ferrites, quaternary ferrites, or quinary ferrites, or a mixture thereof, each with at least one non-magnetic element, particularly wherein the ternary ferrite comprises a fourth compound with a fourth general formula

M_{1-X}AₓFe₂O₄, (4)

wherein M is particular selected from any of {Mn, Ni, Co, Cu}, and wherein A is particular selected from one or more of {Zn, Ti, Li, Mg, Ca}.

In a further embodiment, the ferromagnetic host material comprises a hexaferrite, for example BaFe₁₂O₁₉ or SrFe₁₂O₁₉.

In a further embodiment, the ferromagnetic host material comprises a non-oxide magnetic material with intercalation sites, preferentially for the possible intercalation of lithium ions. A particular example are half Heusler alloys, wherein one fcc sublattice remains unoccupied and can act as host sites for Li atoms, such as CoMnSb and/or NiMnSb.

Further according to step a), the second electrode which is provided as a part of the electrochemical cell at least comprises an amount of the non-magnetic atoms or it is a compound which can release non-magnetic atoms or ions which are adapted to be intercalated into the magnetic host material which comprises the at least one first electrode or a part thereof. Hereby, the second electrode preferably is arranged as the anode within the electrochemical cell and is comprised of or is able to release one or more of the following non-magnetic metallic cations which are particularly selected from cations of the list {Li⁺, H⁺, Na⁺, K⁺, Mg²⁺}, whereby Li⁺ cations are most preferred due to their small geometrical size, rapid ionic movement and conductivity.

In an alternative embodiment, the second electrode is arranged as the cathode within the electrochemical cell and is a reservoir of non-magnetic anions, in particular fluorine anions (F⁻) which can intercalate into the magnetic host material and cause changes which are opposite to what has been described earlier, e. g. oxidize Fe²⁺ to Fe³⁺.

According to step b), a consecutive charging and/or a discharging of the electrochemical cell is performed which allows at least a part of the amount of the non-magnetic atoms to move back and forth between the intercalation sites within the host material which forms the first electrode or a part thereof and to the second electrode. The charging and/or the discharging of the electrochemical cell consecutively changes the amount of electrical energy stored in the magnetic host material and, thereby, only the magnetic state of the material is altered whereas the structure, preferably the crystal structure, of the magnetic host material is retained. By this feature, the present invention considerably differs from V. Sivakumar et al., see above, where the samples were exposed to air after a single discharge in order to perform a magnetization measurement, by which step, however, the samples were at least partly oxidized, which resulted in a change of their crystal structure and, consequently, in a change of their magnetic state, too.

In a particularly preferred embodiment, the consecutive application of a charging potential to the material in order to perform the charging and/or the application of a discharging potential to the material in order to perform the discharging is accomplished in a manner that the structure, in particular, the crystal structure, of the magnetic host material is retained. Preferentially, the charging potential and/or the discharging potential are chosen such that the crystal structure of the material is retained and, thus, allows for a reversible application of the method by returning to the initial magnetic state of the material. By this feature, the present invention additionally differs from V. Sivakumar et al., see above, where the samples were treated with a discharge potential which further modified the crystal structures of the samples, resulting in an observation that the method could not be performed reversibly. However, according to the present invention, the charging and/or the discharging potentials are adjusted carefully, whereby the reversibility of the intercalation of the non-magnetic atoms is retained for a plurality of cycles. This is in opposite to V. Sivakumar et al., see above, which discloses a destruction of the structure of the host material that transforms the electrochemical process as described in this application into a conversion reaction which is generally known not to be reversible to a large extent.

According to a second aspect of the present invention, a device for a reversible alteration of a magnetic state of a material is disclosed. Hereby, the device is particularly adapted for performing the method as described above and/or below. According to the present invention, the device comprises an electrochemical cell with at least one first electrode of a first polarity and at least one second electrode of a second polarity opposing the first polarity. Hereby, the at least one first electrode at least comprises the material which exhibits a ferromagnetic host material, which particularly comprises a plurality of nanocrystallites and which is equipped with intercalation sites for a reception of non-magnetic atoms, whereas the at least one second electrode at least provides an amount of the non-magnetic atoms or a substance which can release non-magnetic atoms. According to the present invention, the device further comprises charging means for a consecutive charging and/or discharging of the electrochemical cell in order to allow at least a part of the non-magnetic atoms to move between the intercalation sites in the magnetic host material which forms the first electrode or a part thereof and the second electrode. As described above, the reversible alteration of the magnetic state in the material is achieved by this kind of movement, whereby the ferromagnetic host material comprises a structure, in particular a crystal structure, which is retained during the alteration of the magnetic state of the material. As further used herein, charging means are arbitrary means which add charge to a specific body; likewise discharging means are arbitrary means which remove charge from a specific body.

In a preferred embodiment, the device is attached to and/or further comprises sensing means for sensing the magnetic state in the material. As further used herein, means for sensing the magnetic state include arbitrary means which are configured to determine the strength (also denoted as amplitude or intensity) and, optionally, the direction of a magnetic moment. The sensing means may comprise a magnetometer or an external substance or body which is at least partially comprised of a substance which is adapted to sense a change in magnetism and can preferentially react to it in any physical or chemical manner.

For further details of the device, reference may be made to the disclosure of the method, as disclosed above and/or below.

According to a third aspect of the present invention, the use of the device for a reversible alteration of a magnetic state of a material as described above and/or below is disclosed. The device may be used in any environment where magnetic properties of a material are relevant, in particular, as a magnetic valve and/or of a magnetic shutter and/or in a magnetic sensor or a part of these devices. The device may further be used in an array which comprises magnetic beads. The device may also be used for a magnetic manipulation and/or a magnetic guidance and/or a magnetic sorting of magnetic or weakly magnetic specimen, particularly in microfluidic applications where inorganic or organic or biological materials or materials which comprise a mixture thereof and that are subject to magnetic phenomena are used. A switchable magnetic device can also find application in robotics in place of electromagnets given the fact that the different magnetic states in this case are switched by supplied charges and stays in that state until an opposite mechanism, i.e. charging or discharging, is triggered as opposed to a usual electromagnet where a constant supply of a large current is required to keep the magnetic state. Therefore, the present invention may be largely energy-efficient.

For further details of the use, reference may be made to the disclosure of the device and/or the method, as disclosed above and/or below.

### Short description of the figures

Further details of the invention may be derived from the following disclosure of preferred embodiments. The features of the embodiments may be realized in an isolated way or in any combination. The invention is not restricted to the embodiments. The embodiments are schematically depicted in the figures. Identical reference numbers in the figures refer to identical elements or functionally identical elements or elements corresponding to each other with regard to their functions.

In the figures:

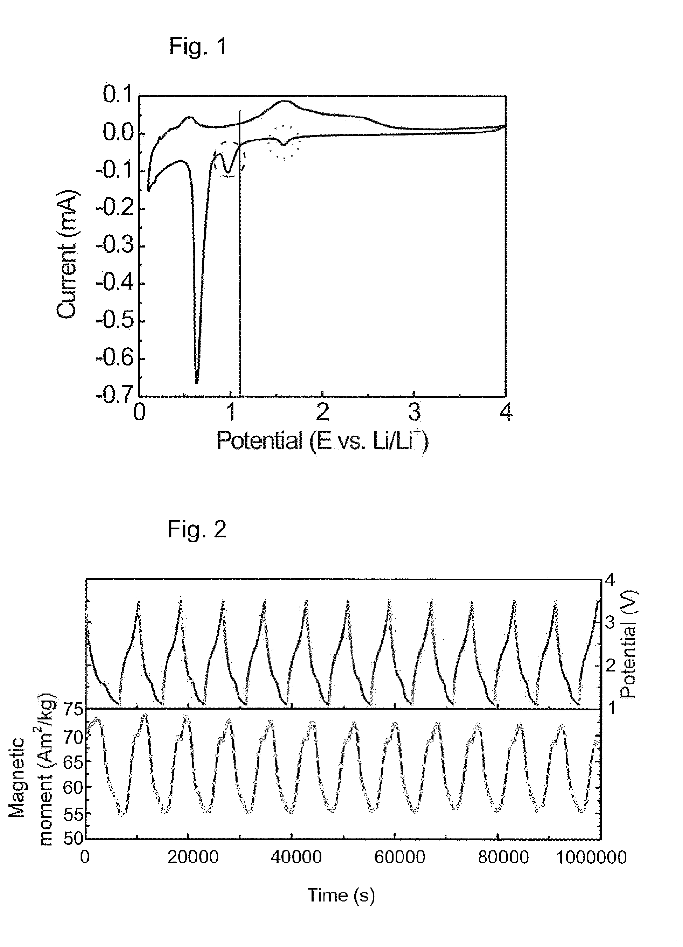

- Fig. 1: shows a cyclovoltammogram of a nanocrystalline defective iron oxide spinel (γ - Fe₂O₃, average diameter *d*_{avg.} ≈ 21 nm), graphite, and binder mixture (*γ-*Fe₂O₃:C:binder = 60:30:10) vs. a Li/Li⁺ electrode with a scan speed of 58 µV/s;
- Fig. 2: exhibits a reversible saturation magnetization change in the defective iron oxide spinel (*γ* -Fe₂O₃) according to Fig. 1 with respect to a lithiation (discharging) and a delithiation (charging), whereby the discharging and the charging cycles have been carried out potentiostatically with a constant current of 115 mA/g (~1 C), whereby the cut-off potentials are set to 1.1 V and 3.5 V during lithiation and delithiation, respectively, and whereby the magnetization was determined in-situ during lithium intercalation and deintercalation with an applied magnetic field of 1 Tesla;

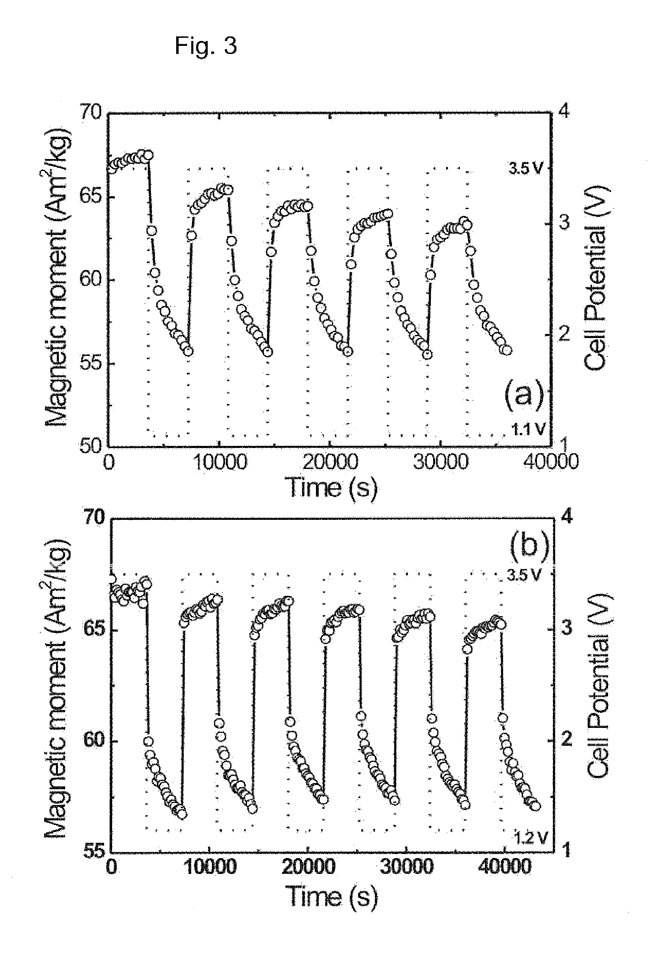

- Fig. 3.: displays a further saturation magnetization reversal measured with an applied field of 1 Tesla with an alternating potential pulse given to the sample, whereby the sampling time was 3 min: (a) The discharging (lithiation) potential was set to 1.1 V being very close to a structure destruction which caused a certain degree of irreversibility due to a long waiting time at that potential; (b) the discharging (lithiation) potential was set to 1.2 V in which case the reversibility of the measured magnetizations at the lithiated and the delithiated state is improved;

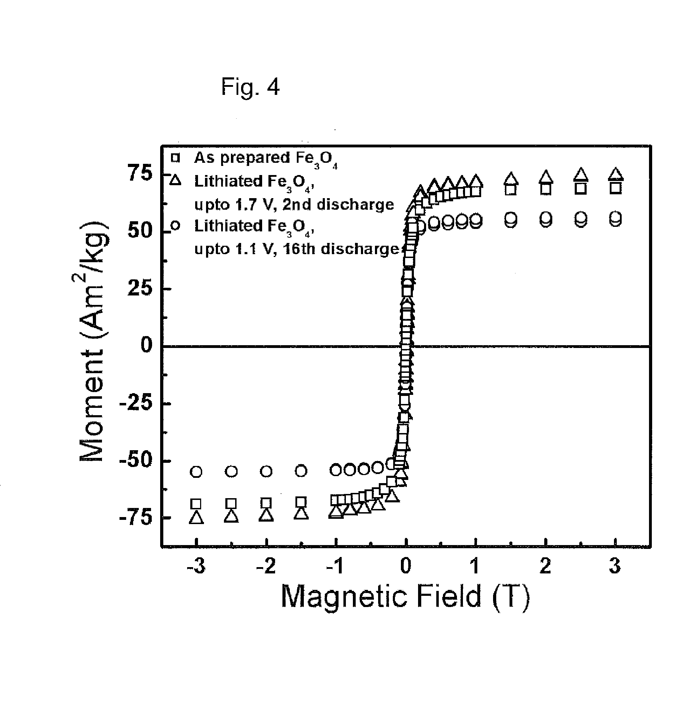

- Fig. 4: depicts a magnetic a hysteresis curve measured for *as prepared* iron oxide nanocrystals, and, after discharging (lithiating), up to a certain (1.7 V and 1.1 V) potential, whereby the lithiation was carried out potentiostatically with a constant current of 115 mA/g (~1 C), and whereby the cell was disconnected at the peak potential from the potentiostat before starting the magnetic measurement; and

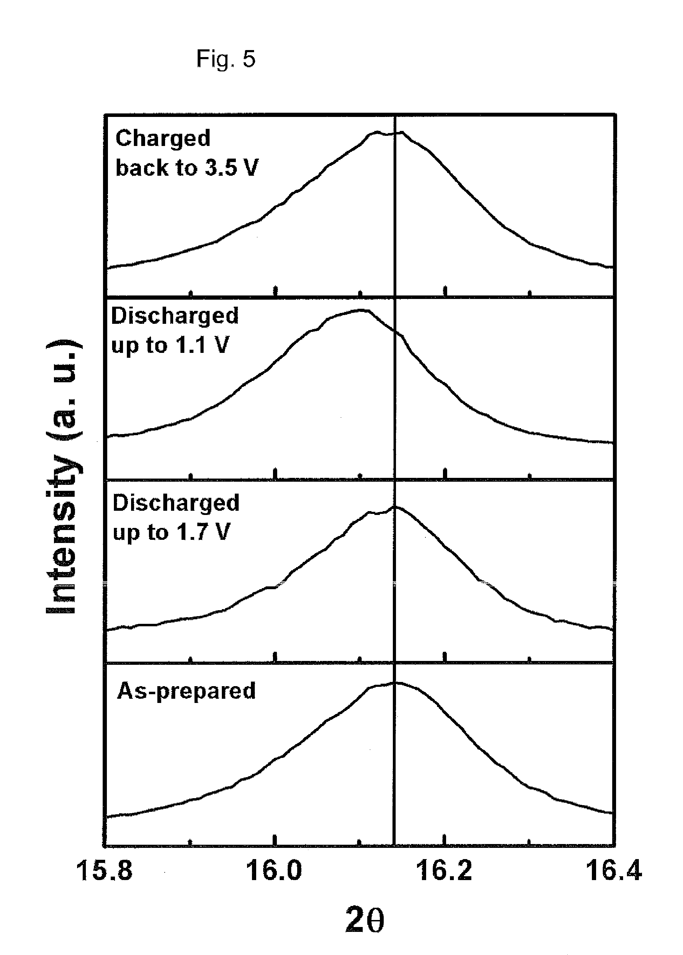

- Fig. 5: shows X-ray diffraction patterns showing an absence of a structural destruction during lithium intercalation and deintercalation, whereby nanocrystals from the cells which were halted at 1.7 V during discharging (lithiation) and where nanocrystals from the cell which were charged (delithiated) up to 3.5 V after discharging show similar diffraction patterns, wherein the positions of the strongest reflection peak match completely, whereas the position of the same peak a for maximally lithiated (up to 1.1 V) sample shows a small shift towards a higher lattice constant whereby, however, the spinel crystal structure was retained.

### Exemplary embodiments

In a particularly preferred embodiment of the present invention, a ferrimagnetic oxide host material was employed as a cathode and reversibly intercalated with lithium with respect to a lithium anode. The material can be considered as a ferrimagnetic oxide host material since the tetrahedral components and the octahedral components are antiferromagnetically coupled whereby the octahedral components are comparatively stronger. Hereby, a mixture of iron oxide spinel, graphite and a binder was used as the cathode in the electrochemical cell. The defective iron oxide spinel ferrite, which mainly comprises *γ* -Fe₂O₃, exhibits a ferromagnetic state with a resultant magnetic moment of 2.61 *µ*_{B} per formula unit, at room temperature. The reversible effect of lithium intercalation and lithium deintercalation on the magnetic state of the material was measured in-situ by placing the electrochemical cell inside a physical property measurement system (PPMS). The details of the experimental work are summarized below.

### Synthesis of iron oxide spinel nanoparticles

Single phase iron oxide spinel Fe₃O₄ nanocrystallites were synthesized at 90 °C by a precipitation technique. Therefore, 0.2 M FeCl₃ and 0.2 M FeSO₄·7 H₂O were dissolved in deionized water separately and stirred at 90 °C for 30 min. The two solutions were mixed together in a beaker under a continuous stirring and kept at 90 °C, for another hour. Then, ammonium hydroxide was added drop-wise to the mixture in order to precipitate iron ferrite. The particle size of the Fe₃O₄ powder was controlled by adjusting the pH of the solution as well as by grounding it to a fine powder by a mortar and a pestle. Finally, the precipitate was washed with a copious amount of deionized water and dried at 80 °C. The Fe₃O₄ nanocrystallites were kept in a glass bottle for further characterizations.

### Physical characterization

Phase and structure of the Fe₃O₄ nanocrystals were characterized by powder X-ray diffraction (XRD) using Mo K_{α} radiation as well as Mössbauer spectroscopy with 5 Tesla applied external field. Prior to the XRD measurement, the instrument was calibrated with a standard Si. Hereby, the same experimental setup and the same control parameters (scan time, step size and scan window) were applied to all samples in the as prepared state, the lithiated state and the delithated state. For the lithiated samples which are not stable under oxygen ambience, the sample was loaded to a glass capillary sample holder inside a N₂ filled glove box, and then sealed by introducing vacuum glue into the capillary, followed by a melting and a sealing of the glass with a gas burner. Similarly, for the Mössbauer measurement of the as prepared samples and the lithiated samples, the nanocrystals were sealed using ultra-high vacuum epoxy. It is well known that magnetite (Fe₃O₄) nanocrystals easily transform to an iron deficient spinel-phase maghemite (*γ* -Fe₂O₃) at ambient temperatures. From the analysis of the XRD data, a 13% iron vacancy at the octahedral site could be observed whereas pure maghemite shows 16.7%. Similarly, the Mössbauer result indicates the presence of only a few (2%-3%) percent Fe²⁺ may be present while pure magnetite and pure meghamite exhibit 33% Fe²⁺ and no Fe²⁺, respectively. From these results, it can be concluded that the starting host material is very close to be ideal magnetite structure. Consequently, the starting material will be called *defective iron deficient oxide spinel* or simply *maghemite* (*γ* -Fe₂O₃). The saturation magnetization of the as prepared material was 2.61 *µ*_{B} at room temperature. The average crystallite size of the as-prepared maghemite (*γ* - Fe₂O₃) was found to be around 18 nm.

### Electrode preparation and Cell fabrication

The electrodes for electrochemical studies were prepared by mixing the active material *γ* - Fe₂O₃, graphite (*d*_{avg.} ≈ 10 nm) as electronically conducting additive, and polyvinylidene fluoride (PVDF) as binder in the weight ratio of 60:30:10. N-Methyl-pyrrolidinone (NMP) was used as a solvent for the PVDF binder in order to prepare the slurry. The doctor-blade technique was used to coat the slurry onto an etched Al-foil (20 µm thickness) to form a layer of a thickness of approx. 50 µm The film was dried overnight at 80 °C inside a vacuum oven to evaporate the NMP and then cut into small square-sized pieces of about 0.25 cm² for an electrochemical measurement with in-situ recording of magnetic response in the PPMS. The sample size was limited by the lateral size limitation of a sample inside PPMS. Prior to a cell assembly, the coated electrodes were dried at 80 °C for 10-20 minutes. The cell was assembled inside a glove box, which maintains the water and oxygen content below 1 ppm. A separator was used to physically separate the electrodes. 1 M LiPF₆ dissolved in ethylene carbonate (EC) and diethyl carbonate (DEC) in a 1:1 volume ratio was employed as an electrolyte. A gold sheet (metallic grade; 99.9% purity) was used as a current collector for the cathode, whereas a Cu sheet (metallic grade; 99.9% purity) was used as the current collector for the anode. A Li metal foil was used as the counter electrode (anode) of the magnetic host material containing electrode. A thin cylindrical glass tube was employed to enclose the cell and to hold the electrolyte. The cell was aged for 2-3 hours prior to the start of the measurements in order to ensure the complete percolation of electrolyte to electrode material.

A highly reversible variation of the saturation magnetism of 30 % was observed with roughly 1 mole, more accurately 0.94 mole, of Li insertion per formula unit of maghemite (*γ* -Fe₂O₃). According to cyclic voltammetry measurements, above this level partial structure destruction, or a transformation of the spinel lattice to a rock salt kind of lattice, may take place which may cause a certain degree of irreversibility. However, 1 mole of Li per formula unit may already sufficient a for much larger effect size even up to a ferrimagnetic-antiferromagnetic transition or vice versa when the starting ferromagnetic host material is judicially chosen as described in the earlier section.

### Cycling Performance

Similar to the in-situ magnetic measurement, an identical cell is allowed to undergo an extremely slow (58 µV/s scan rate) cyclovoltammetry measurement in order to determine a characteristic potential for the electrochemical phenomena taking place. The open circuit potential (OCP) of the assembled cells was always more than 3.0 V, while some of them showed values up to 3.4 V. As can be seen from Fig. 1, a cathodic scan from the OCP showed a low current plateau until 1.7 V, after which the large amount of lithium intercalation started which is marked by a characteristic intercalation peak roughly at 1.6 V. In Fig. 1, this intercalation peak is marked with a dotted circle (······). With further lowering of the potential, another small peak marked with a dashed circle (------) and related to a partial structural destruction appears just around 1.0 V which is followed by a very large peak corresponding to complete structural destruction at around 0.6 V. As a high reproducibility and reversibility of the phenomena is important, a lithium intercalation is aimed which retains the structure of the material. Therefore, for performing a discharging/charging cycle which has been measured for cells inside the PPMS magnetometer, the cut-off potential has always been limited to 1.1 V and 3.5 V, respectively. The lower limit of 1.1 V ensures that no structure destruction occurs and is marked by a straight line in Fig. 1, while the upper limit of 3.5 V was chosen well below the potential of the electrolyte decomposition.

Fig. 2 shows a reversal of the saturation magnetization of the cell measured under an applied field of 1 Tesla. The potentiostatic discharging and charging cycles have been measured with a constant current of 115 mA/g (~1 C); as mentioned the cut-off potentials were set to 1.1 V and 3.5 V during the lithiation and the delithiation steps, respectively. As can be seen for the first cycle which started from OCP or for the other cycles which are started from the delithiated state at 3.5 V, a potential decrease up to 1.7 V in fact increased the magnetic moment by a few percent which is followed by a steep decrease that continued up to the lowest potential value of 1.1 V which corresponds to the highest lithium content. The current integration gives a rough estimation of the amount of inserted lithium which sums up to nearly 1 mole per formula unit. The change in magnetism in this iron ferrite system can simply be explained by a change in cation distribution that is taking place with lithiation. Firstly, the lithium intercalation should surely change the Fe³⁺ to Fe²⁺ cationic ratio as each lithium ion insertion correspond to reduction of one Fe³⁺ to Fe²⁺ state. Now in the iron ferrimagnet the resultant moment comes from the resultant moment of the tetrahedral and octahedral sublattices which are antiferromagnetically coupled. On the other hand, each Fe³⁺ and Fe²⁺ cation exhibits a different magnetic moment, 5 *µ*_{B} and 4 *µ*_{B}, respectively. Therefore, the initial increase and the later decrease in magnetism can be associated to a reduction of Fe³⁺ by Li⁺ at different sites. Most likely, the Fe³⁺ at the tetrahedral site gets reduced initially thereby making the total magnetic moment stronger, it can also be associated to shift of the reduced Fe²⁺ from the tetrahedral sites to the octahedral site vacancies which is probable because Fe²⁺ ions are too large for the tetrahedral site anyway. Whereas in the later stage, the octahedral site Fe³⁺ are getting reduced to give around 1/3 of Fe²⁺ ions at the end of discharging-as per Mössbauer results, which is reducing the resultant magnetization. However, for the present material, i.e. iron deficient spinel oxide (*γ* -Fe₂O₃) with a net staring magnetic moment of 2.6 *µ*_{B} per formula unit, at room temperature, it is not possible to reach to the completely antiferromagnetic state with an insertion of approx. 1 Li per formula unit, however, other systems with less net magnetic moment could be used the starting magnetic host material as discussed in the previous section.

Next, the kinetics and potential ease of the applicability of the present invention was tested by repeating the same measurement but with potential pulses. It is always easy to apply a potential pulse to make use of a certain physical effect compared to constant current or constant potential scans in practice. Figs. 3a-b show a magnetic response to a potential jump between 3.5 V and 1.1 V (as presented in Fig. 3a) and between 3.5 V and 1.2 V (as displayed in Fig. 3b), respectively. At each potential the waiting time was 1 h while the sampling rate of the measured magnetic data was 3 minutes. In contrast to Fig. 3b which shows excellent reproducibility of the effect, in Fig. 3a the magnetic moment is not in the situation to completely return to the higher value when deintercalation is allowed by setting the potential to 3.5 V. This result can be attributed to the fact that a structural destruction occurs which may be happening as a result of a long waiting (1 h) at 1.1. V, which is rather close to the onset of the structural destruction peak as presented in Fig. 1. This interpretation is support by Fig. 2, wherein the current and hence the potential is immediately reversed after hitting 1.1 V, and, hence, a long-term reproducibility of the switching behavior is possible.

Fig. 4 shows the complete hysteresis loop for
- as prepared *γ* -Fe₂O₃ (square symbols),
- a sample which is lithiated up to 1.7 V corresponding to the highest magnetic moment point in the Fig. 2 (triangles) and
- a sample that is lithiated up to 1.1 V (circles).

As expected, the hysteresis loop corroborates the saturation magnetization values which have been noted during the discharging charging cycles as shown in Fig. 2. The sample which stopped at 1.7 V shows a higher saturation magnetization compared to the as-prepared sample whereas the sample which is lithiated up to 1.1 V shows a much lower saturation magnetization as compared to the as-prepared sample. The saturation magnetization values are also matching quite well with the values obtained at that potential during cycling of the cell; approx. 67 Am²/kg, 74 Am²/kg and 54 Am²/kg was measured for the as-prepared sample, the sample lithiated up to 1.7 V, and the sample lithiated up to 1.1 V samples, respectively.

As previously mentioned, the XRD patterns were recorded for the samples at various stages of their lithiation as well. The complete XRD patterns (not shown here) confirm the retention of the crystal structure since all patterns looked exactly similar without a presence of any spurious other phase or any change in a relative intensity of reflections. Only a peak shift to lower angles was observed for the sample which was lithiated to 1.1 V. In Fig. 5 the strongest peak of the respective patterns which correspond to the characteristic spinel peak are compared. It can be seen from Fig. 5 that the position of the peak for the sample which is lithiated up to 1.7 V, or for the sample which is re-charged again (delithiated) up to 3.5 V after being lithiated to 1.1 V, remains exactly at the same position as the as-prepared sample. Only for the batch which was lithiated up to 1.1 V, a shift of about 0.06 degree to the left is observed which corresponds to an increase in the lattice spacing due to a lithium insertion.

## Claims

1. A method for a reversible alteration of a magnetic state of a material, comprising the following steps:
a) Providing an electrochemical cell with at least one first electrode of a first polarity and at least one second electrode of a second polarity opposing the first polarity, wherein the at least one first electrode at least comprises a ferromagnetic host material with intercalation sites for a reception of non-magnetic atoms, and wherein the at least one second electrode at least comprises an amount of the non-magnetic atoms;
b) Consecutively charging and/or discharging the electrochemical cell to allowing at least a part of the amount of the non-magnetic atoms to move between the intercalation sites in the host material and the second electrode, by which movement the magnetic state of the material is reversibly altered,
wherein the host material comprises a structure which is retained during the alteration of the magnetic state.

2. The method according to the preceding claim, wherein the alteration of the magnetic state is completely or partially reversible.

3. The method according to any of the preceding claims, wherein the magnetic state is altered between a strong ferromagnetic state of the material and either a weak ferromagnetic state of the material or a non-ferromagnetic state of the material, or vice-versa.

4. The method according to any of the preceding claims, wherein the structure of the magnetic host material is retained by applying a charging potential to the material to perform the charging and/or by applying a discharging potential to the material to perform the discharging.

5. A device for a reversible alteration of a magnetic state of a material, particularly for performing the method according to any of the preceding claims, comprising an electrochemical cell with at least one first electrode of a first polarity and at least one second electrode of a second polarity opposing the first polarity, wherein the first electrode at least comprises the material comprising a ferromagnetic host material with intercalation sites for a reception of non-magnetic atoms, and wherein the second electrode at least provides an amount of the non-magnetic atoms, further comprising charging means for consecutively charging and/or discharging the electrochemical cell for allowing at least a part of the amount of the non-magnetic atoms to move between the intercalation sites in the material and the second electrode for achieving the reversible alteration of the magnetic state of the material, whereby the structure of the host material is retained during the alteration of the magnetic state.

6. The device according to any of the preceding claims referring to a device, wherein the host material comprises a first compound with a first general formula
AFe₂O₄,
wherein A is at least one non-magnetic element, in particular selected from one or more of Mg, Zn, Ti, Li and Ca, particularly MgFe₂O₃, ZnFe₂O₄, TiFe₂O₄, and CaFe₂O₄.

7. The device according to any of the preceding claims referring to a device, wherein the ferromagnetic host material comprises a third compound with a third general formula
BFe₂O₄,
wherein B is at least one magnetic element and is selected from any of Fe, Mn, Co, Ni, and Cu.

8. The device according to the preceding claim referring to a device, wherein the ferromagnetic host material comprises Fe₃O₄, γ -Fe₂O₃, MnFe₂O₄, CoFe₂O₄, or NiFe₂O₄.

9. The device according to any of the preceding claims referring to a device, wherein the ferromagnetic host material comprises a ternary ferrite, a quaternary ferrite or a quinary ferrite, or a mixture thereof, each with at least one non-magnetic element, particularly wherein the ternary ferrite comprises a fourth compound with a fourth general formula
M₁₋ₓAₓFe₂O₄,
wherein M is particular selected from one or more of Mn, Ni, and Co, and wherein A is particular selected from one or more of Zn, Ti, Li, Mg, or Ca.

10. The device according to any of the preceding claims referring to a device, wherein the ferromagnetic host material comprises a hexaferrite, particularly BaFe₁₂O₁₉, or SrFe₁₂O₁₉.

11. The device according to any of the preceding claims referring to a device, wherein the ferromagnetic host material comprises a non-oxide magnetic material with intercalation sites, in particular a half Heusler alloy, particularly CoMnSb, or NiMnSb.

12. The device according to any of the preceding claims referring to a device, wherein the non-magnetic atoms to intercalate into the ferromagnetic host material comprise metallic cations, particularly selected from one or more of lithium, hydrogen, sodium, potassium, and magnesium cations, and/or anions, in particular fluorine anions.

13. The device according to any of the preceding claims referring to a device, wherein the electrochemical cell further comprises a separator to physically separate the at least one first electrode from the at least one second electrode, and wherein the electrochemical cell further comprises an electrolyte.

14. The device according to any of the preceding claims referring to a device, wherein the device is attached to and/or further comprises sensing means for sensing the magnetic state of the material.

15. Use of a device for a reversible alteration of a magnetic state of a material according to any of the preceding claims referring to a device, as a magnetic valve and/or of a magnetic shutter and/or of a magnetic sensor and/or a part thereof and/or in an array comprising magnetic beads and/or for magnetic manipulation and/or magnetic guidance and/or magnetic sorting of a substance which is sensitive to the presence of a magnetic material.
